# EUROPÄISCHE PATENTSCHRIFT

(11) **EP 1 152 914 B1**
(45) Veröffentlichungstag und Bekanntmachung des Hinweises auf die Patenterteilung: **11.06.2008**
(21) Anmeldenummer: 00983213.0
(22) Anmeldetag: 04.12.2000
(51) Int. Cl.: B60K 28/16, B60T 8/00

(54) **VERFAHREN UND STEUERGERÄT FÜR EINE VORRICHTUNG ZUR BEEINFLUSSUNG DES VORTRIEBS EINES KRAFTFAHRZEUGS**
METHOD AND CONTROL UNIT FOR INFLUENCING THE PROPULSION OF A MOTOR VEHICLE THAT IS DRIVEN BY A DRIVING MOTOR
PROCEDE ET UNITE DE COMMANDE POUR DISPOSITIF INFLUENCANT LA PROPULSION D'UN VEHICULE

(30) Priorität: 03.12.1999 DE 19958391
(43) Veröffentlichungstag der Anmeldung: 14.11.2001
(73) Patentinhaber: ROBERT BOSCH GMBH, 70469 Stuttgart (DE)
(72) Erfinder: SCHMITT, Johannes, 71706 Markgröningen (DE); WEISS, Tobias, 70839 Gerlingen (DE)
(86) Internationale Anmeldenummer: PCT/EP2000/012162
(87) Internationale Veröffentlichungsnummer: WO 2001/040010

(56) Entgegenhaltungen:
- EP-A- 1 070 623
- DE-A- 19 540 067
- US-A- 4 933 856

## Beschreibung

Die vorliegende Erfindung betrifft ein Verfahren zur Beeinflussung des Vortriebs eines von einem Antriebsmotor angetriebenen Kraftfahrzeugs. Bei dem Verfahren wird eine das Drehmoment des Antriebsmotors beeinflussende Eingriffsgröße ermittelt. Die Eingriffsgröße wird in Abhängigkeit von mindestens einer Radgröße, die das Radverhalten mindestens eines Rades des Kraftfahrzeugs beschreibt, und/oder von mindestens einer Fahrzeugbewegungsgröße, die die Bewegung des Kraftfahrzeugs beschreibt, übermittelt. Der Antriebsmotor wird zur beschränkenden Beeinflussung des Vortriebes des Kraftfahrzeugs mit der Eingriffsgröße beaufschlagt.

Die Erfindung betrifft außerdem ein Steuergerät für eine Vorrichtung zur Beeinflussung des Vortriebs eines von einem Antriebsmotor angetriebenen Kraftfahrzeugs. Das Steuergerät weist Mittel zum Bestimmen mindestens einer Radgröße, die das Radverhalten mindestens eines Rades des Kraftfahrzeugs beschreibt, auf. Alternativ oder zusätzlich weist das Steuergerät Mittel zum Bestimmen mindestens einer Fahrzeugbewegungsgröße auf, die die Bewegung des Kraftfahrzeugs beschreibt. Des Weiteren weist das Steuergerät Mittel zum Bestimmen einer das Drehmoment des Antriebsmotors beeinflussenden Eingriffsgröße auf. Die Eingriffsgröße wird in Abhängigkeit von der mindestens einen Radgröße und/oder der mindestens einen Fahrzeugbewegungsgröße bestimmt. Der Antriebsmotor wird zur beschränkenden Beeinflussung des Vortriebs des Kraftfahrzeugs mit der Eingriffsgröße beaufschlagt.

Die vorliegende Erfindung betrifft des Weiteren ein Speicherelement für ein Steuergerät einer Vorrichtung zur Beeinflussung des Vortriebs eines Kraftfahrzeugs. Das Speicherelement ist insbesondere als ein Read-Only-Memory, als ein Random-Access-Memory oder als ein Flash-Memory ausgebildet. Auf dem Speicherelement ist ein Computerprogramm abgespeichert, das auf einem Rechengerät, insbesondere auf einem Mikroprozessor, ablauffähig ist. Schließlich betrifft die Erfindung auch ein solches Computerprogramm.

### Stand der Technik

Verfahren und Vorrichtungen zur Beeinflussung des Vortriebs eines Kraftfahrzeugs sind aus dem Stand der Technik in vielerlei Modifikationen bekannt.

Die US 4 933 856 zeigt alle Merkmale des Oberbegriffs des Anspruchs 1.

Aus der DE 195 40 067 A1 ist ein Verfahren zur Regelung des Antriebs mehrerer getrennt angetriebener Fahrzeugräder eines Kraftfahrzeugs bekannt. Bei Auftreten von Antriebsschlupf an einem der Antriebsräder des Kraftfahrzeugs wird das schlupfbedingt fehlende Traktionsmoment bis zu einem gewissen Anteil auf das oder die anderen Antriebsräder übertragen. Damit wird sichergestellt, dass kein zu großes Antriebsmoment auf das noch greifende Antriebsrad übertragen wird, das auch bei diesem Rad erhöhten Antriebsschlupf erzeugen würde. Insbesondere wird der Antriebsschlupf des noch besser greifenden Antriebsrades auf einen Antriebsschlupf-Sollwert geregelt, der auf einen in jedem Fall noch eine ausreichende Spurführung sichernden Minimal-Sollwert gesetzt wird.

Um in bestimmten Situationen mit einem erhöhten Antriebsschlupf fahren zu können, wird in diesen Situationen der Antriebsschlupf-Sollwert kontinuierlich angehoben. Zur Detektion dieser Situationen wird die Stellung eines Fahrpedals des Kraftfahrzeugs ausgewertet. Wenn der Fahrer das Fahrpedal in einer Situation mit erhöhter Antriebsschlupfneigung nicht zurücknimmt, sondern hält oder sogar noch weiter durchdrückt, wird dies als Wunsch interpretiert, einen größeren Antriebsschlupf an den Antriebsrädern einzustellen. Die Antriebsschlupf-Sollwerte können für alle Antriebsräder gleichermaßen oder radindividuell festgelegt werden.

Bei dem bekannten Verfahren wird als Radgröße der Antriebsschlupf eines Antriebsrades des Kraftfahrzeugs herangezogen. Als Eingriffsgröße wird ein Antriebsschlupf-Sollwert für eines oder mehrere Antriebsräder des Kraftfahrzeugs ermittelt.

Als ein weiteres Beispiel für ein Verfahren und eine Vorrichtung zur Beeinflussung des Vortriebs eines Kraftfahrzeugs sei das SAE-Paper 870 337 "ASR-Traction Control - A Logical Extension of ABS" genannt. Mit einer derartigen Antriebsschlupfregelung, kurz ASR genannt, wird der Vortrieb eines Kraftfahrzeugs in Abhängigkeit des für die Antriebsräder ermittelten Radschlupfes eingestellt. Dabei wird der Vortrieb so eingestellt, dass der Schlupf der angetriebenen Räder einen für die Antriebsräder vorgegebenen Schwellenwert nicht überschreitet. Durch diese Maßnahme wird im Antriebsfall die Stabilität des Kraftfahrzeugs bei ausreichender Traktion gewährleistet.

Aus der in der Automobiltechnischen Zeitschrift (ATZ) 96, 1994, Heft 11, auf den Seiten 674 - 689 erschienenen Veröffentlichung "FDR - Die Fahrdynamikregelung von Bosch" ist eine Schlupfregelung bekannt, bei der die Gierrate des Kraftfahrzeugs geregelt wird. Hierzu wird die Abweichung zwischen einem Sollwert für die Gierrate und einem gemessenen Wert für die Gierrate ermittelt. In Abhängigkeit dieser Regelabweichung werden Sollschlupfwerte ermittelt, die mit Hilfe von Bremseingriffen und Motoreingriffen eingestellt werden. Diese Art von Schlupfregelung besteht aus einem überlagerten Regler für die Gierrate und unterlagerten Reglern für einen Bremsschlupf und einem Antriebsschlupf.

Neben der klassischen Antriebsschlupfregelung, wie sie in dem SAE-Paper 870 337 beschrieben ist und bei der der an den Antriebsrädern auftretende Radschlupf mit Schwellenwerten verglichen wird, ist aus der DE 199 13 825 ein Verfahren zur Einstellung des Vortriebs bekannt, bei dem anhand von Kennfeldern eine Eingriffsgröße ermittelt wird. Es sind zwei Kennfelder vorgesehen. Mit einem ersten Kennfeld wird abhängig von einem Gradienten des Schlupfes und einer Referenzgeschwindigkeit des Kraftfahrzeugs ein erster Wert für die Eingriffsgröße gebildet. Mit einem zweiten Kennfeld wird abhängig von einem Schlupf und der Referenzgeschwindigkeit des Kraftfahrzeugs ein zweiter Wert für die Eingriffsgröße gebildet. Die Eingriffsgröße an sich ergibt sich dann aus den beiden Werten, bspw. durch Addition. In Abhängigkeit der Eingriffsgröße wird der Vortrieb des Kraftfahrzeugs eingestellt.

Ferner ist aus der DE 198 44 912 eine Vorrichtung bekannt, mit der in Abhängigkeit einer Querbeschleunigungsgröße und einer Größe, die das zeitliche Verhalten der Querbeschleunigungsgröße beschreibt, eine Eingriffsgröße ermittelt wird. Die Ermittlung der Eingriffsgröße erfolgt anhand zweier Kennfelder, einem ersten Kennfeld für die Querbeschleunigung und einem zweiten Kennfeld für die Größe, die das zeitliche Verhalten der Querbeschleunigung beschreibt. Zur Beeinflussung des Vortriebes werden in Abhängigkeit der Eingriffsgröße Eingriffe in den Antriebsmotor des Kraftfahrzeugs vorgenommen. Bei den vorstehend aufgeführten Verfahren und Vorrichtungen zur Beeinflussung des Vortriebs eines Kraftfahrzeugs gibt es mit Blick auf den Antriebsschlupf Situationen, in denen ein größerer Vortrieb bzw. ein erhöhter Antriebsschlupf erwünscht ist.

Als eine Situation, in der ein größerer Vortrieb wünschenswert ist, sei bspw. eine Fahrt auf einer unbefestigten Fahrbahn, z. B. auf Schotter oder im Tiefschnee oder der Betrieb des Kraftfahrzeugs mit Schneeketten oder eine Fahrt im Gelände (sogenannter Offroad-Betrieb) genannt. Bei einer Fahrt im Tiefschnee kann es vorkommen, dass sich die Räder des Kraftfahrzeugs "eingraben" und das Fahrzeug feststeckt. Wenn nun der Fahrer in dieser Situation versucht anzufahren, wird ihm dies nicht gelingen. Da sich die Räder im Tiefschnee eingegraben haben, weisen diese bei einem Anfahrversuch einen großen Antriebsschlupf auf. Eine ASR detektiert den Schlupf und bremst die angetriebenen Räder ab. Somit kann der Fahrer keinen hinreichend großen Vortrieb erzeugen, der ihm ein Freifahren des Kraftfahrzeugs aus der "eingegrabenen" Position ermöglichen würde.

Aus diesem Grund ist es bei ASR-Systemen bekannt, im Armaturenbrett einen von dem Fahrer betätigbaren Schalter anzuordnen. Durch Betätigen des Schalters werden die Schlupfschwellen des ASR-Systems angehoben. Das führt dazu, dass bei gedrücktem Schalter ein erhöhter Vortrieb eingestellt werden kann. Dem Fahrer eines im Tiefschnee "eingegrabenen" Kraftfahrzeugs ist es somit möglich, das Fahrzeug durch "Freischaukeln" aus dem Tiefschnee heraus wieder in Fahrt zu bringen.

Eine weitere Situation, in der ein größerer Vortrieb des Kraftfahrzeugs wünschenswert ist, ist bspw. eine sportliche Fahrweise. Ein sportlicher Fahrer kann sich aufgrund der Eingriffe, die eine Schlupfregelung oder eine Vorrichtung, wie sie aus der DE 198 44 912 bekannt ist, zu sehr beschränkt fühlen. Die Schlupfregelung oder die angesprochene Vorrichtung stellen zwar eine ausreichende Seitenstabilität des Kraftfahrzeugs bei einer Kurvenfahrt sicher, dies führt allerdings dazu, dass ein Fahrer eine Kurvenfahrt nicht mit einem von ihm gewählten beliebigen Vortrieb ausführen kann, denn durch die Bereitstellung der Eingriffsgröße in Abhängigkeit der Querbeschleunigung und der zeitlichen Änderung der Querbeschleunigung wird die Eingriffsgröße und mit ihr auch der Vortrieb begrenzt. Die Begrenzung erfolgt dergestalt, dass bei der vorliegenden Querbeschleunigung und der zeitlichen Änderung der Querbeschleunigung unter Berücksichtigung eines gewissen Sicherheitspotentials das Fahrverhalten des Kraftfahrzeugs höchstwahrscheinlich stabil ist. Dies kann für einen sportlichen Fahrer jedoch eine Einschränkung darstellen.

Der aus dem Stand der Technik bekannte Einsatz eines Schalters zum Herabsetzen der Antriebsschlupfschwellen birgt auch Sicherheitsgefahren. Falls vergessen wird, den Schalter wieder zu lösen und sich das Kraftfahrzeug nicht mehr in einer der beschriebenen Situationen (z. B. Tiefschnee) befindet, kann in anderen Situationen, in denen die Unterstützung durch eine Schlupfregelung, z. B. eine Antriebsschlupfregelung oder eine Gierratenregelung, erforderlich wäre, keine oder nur eine unzureichende Stabilisierung der Fahrzeugdynamik erfolgen.

Deshalb ist es eine Aufgabe der vorliegenden Erfindung, bei einem Kraftfahrzeug mit Schlupfregelung eine einfach handhabbare, sichere und zuverlässige Möglichkeit zu schaffen, automatisch Situationen zu erkennen, in denen der Fahrer einen größeren Vortrieb wünscht, und in diesen Situationen einen größen Vortrieb zur Verfügung zu stellen.

Zur Lösung dieser Aufgabe schlägt die Erfindung ausgehend von dem Verfahren zur Beeinflussung des Vortriebs eines Kraftfahrzeugs der eingangs genannten Art vor, dass
- eine Pedalgröße ermittelt wird, die die Betätigung eines Fahrpedals des Kraftfahrzeugs beschreibt;
- ein der Pedalgröße entsprechender Vortrieb mit einem der Eingriffsgröße entsprechenden Vortrieb verglichen wird;
- die Eingriffsgröße in Abhängigkeit von der Pedalgröße zu einem entsprechenden größeren Vortrieb hin korrigiert wird, falls der der Pedalgröße entsprechende Vortrieb größer als der der Eingriffsgröße entsprechende Vortrieb ist,
- wobei zur Korrektur der Eingriffsgröße in Abhängigkeit der Pedalgröße und der Drehzahl des Antriebsmotors eine Korrekturgröße ermittelt und zu der Eingriffsgröße addiert wird; und
- der Antriebsmotor mit der korrigierten Eingriffsgröße beaufschlagt wird.

### Vorteile der Erfindung

Zur Erkennung von Situationen, in denen der Fahrer einen größeren Vortrieb wünscht, wird eine Pedalgröße ermittelt, die die Betätigung des Fahrpedals durch den Fahrer beschreibt. Die Pedalgröße ist ein Mass dafür, wieviel Vortrieb der Fahrer wünscht. Ein große Pedalgröße kann als ein Indiz gewertet werden, dass der Fahrer einen größeren Vortrieb wünscht. Für den Fall, dass die Pedalgröße einem größeren Vortrieb entspricht als dem, der aufgrund der Motoreingriffe, die in Abhängigkeit der Eingriffsgröße durchgeführt werden, eingestellt ist, wird die Eingriffsgröße wenigstens in Abhängigkeit der Pedalgröße so verändert, dass ein größerer Vortrieb eingestellt wird.

Die Eingriffsgröße soll für den Fall, dass die Pedalgröße einem größeren Vortrieb entspricht als dem, der aufgrund der Motoreingriffe, die in Abhängigkeit der Eingriffsgröße durchgeführt werden, eingestellt ist, derart verändert werden, dass ein größerer Vortrieb eingestellt wird. Die Veränderung der Eingriffsgröße wird folgendermaßen realisiert: Zunächst wird ein Kennfeld ausgewertet, für das die Pedalgröße und eine Größe, die die Drehzahl des Motors beschreibt, Eingangsgrößen darstellen. In Abhängigkeit des Kennfelds ergibt sich eine Korrekturgröße, die zu der Eingriffsgröße addiert wird. Dadurch ergibt sich eine korrigierte und somit größere Eingriffsgröße, die zu einem größeren Vortrieb führt. Dieser größere Vortrieb ist mit der Vorstellung des Fahrers korreliert, die sich aus seiner Betätigung des Fahrpedals ableiten läßt.

Das Kennfeld ist vorteilhafterweise derart aufgebaut, dass die Korrekturgröße zum einen mit zunehmender Pedalgröße und zum anderen mit zunehmender Motordrehzahl zunimmt. Die Korrekturgröße nimmt dabei maximale Werte an, wenn die Pedalgröße groß und die Motordrehzahl klein ist. Diese Abhängigkeit der Korrekturgröße von den Eingangsgrößen des Kennfeldes läßt sich folgendermaßen erklären: In Abhängigkeit der Pedalgröße soll der Vortrieb vergrößert werden, folglich muss mit zunehmender Pedalgröße die Korrekturgröße größer werden. Die Drehzahl des Antriebsmotors wird berücksichtigt, da der Motor mit zunehmender Drehzahl weniger stark korrigiert werden sollte, um die Stabilität des Kraftfahrzeugs nicht zu gefährden. Folglich muss die Korrekturgröße mit zunehmender Drehzahl abnehmen.

Die vorliegende Erfindung umfasst zwei verschiedene Konzepte. Bei einem ersten Konzept wird in Abhängigkeit wenigstens einer Radgröße, die das Radverhalten beschreibt, eine Eingriffsgröße ermittelt, in deren Abhängigkeit Motoreingriffe zur Einstellung des Vortriebs des Fahrzeugs durchgeführt werden. Bei diesem Konzept kann es sich beispielsweise um eine klassische Antriebsschlupfregelung handeln, wie sie in dem eingangs erwähnten SAE-Paper 870337 beschrieben ist. Bei dieser Antriebsschlupfregelung wird der an den angetriebenen Rädern vorliegende Schlupf mit einem entsprechenden Schwellenwert verglichen. In diesem Fall entspricht also die Radgröße dem Radschlupf.

Ferner kann es sich bei dem ersten Konzept auch um eine Schlupfregelvorrichtung handeln, wie sie beispielsweise aus der in der Automobiltechnischen Zeitschrift (ATZ) 96, a.a.O. bekannt ist. Auch in diesem Fall entspricht die Radgröße dem Radschlupf.

Alternativ kann dem ersten Konzept auch die Vorgehensweise zugrunde liegen, die in der DE 199 13 825 beschrieben ist. Bei dieser Vorrichtung wird als Radgröße zum einen der Radschlupf selbst und zum anderen die zeitliche Änderung bzw. der Gradient des Radschlupfes verwendet.

Liegt dem ersten Konzept die in der DE 199 13 825 beschriebene Vorgehensweise zugrunde, so wird als Pedalgröße vorteilhafterweise der Weg des Pedals, um den das Pedal aufgrund der Betätigung durch den Fahrer ausgelenkt wird, erfasst. Alternativ kann auch der Winkel der Pedalauslenkung erfaßt werden. Eine entsprechende Pedalgröße wird auch bei den Schlupfregelungen ausgewertet, die in dem eingangs genannten SAE-Paper, a.a.O. bzw. dem ATZ-Artikel, a.a.O. beschrieben sind. Als Pedalgröße kann schließlich auch eine Größe erfasst werden, die die zeitliche Änderung des Pedalweges beschreibt, also der Gradient des Pedalweges.

Bei einem zweiten Konzept wird in Abhängigkeit wenigstens einer Fahrzeugbewegungsgröße, die die Fahrzeugbewegung beschreibt, eine Eingriffsgröße ermittelt, in deren Abhängigkeit Motoreingriffe zur Einstellung des Vortriebs durchgeführt werden. Solch ein Konzept ist beispielsweise in der DE 198 44 912 beschrieben. Diese Vorrichtung enthält Mittel, mit denen eine Querbeschleunigungsgröße erfaßt wird, die die auf das Fahrzeug wirkende Querbeschleunigung beschreibt. Ferner enthält die Vorrichtung Mittel, mit denen eine Größe ermittelt wird, die das zeitliche Verhalten der Querbeschleunigungsgröße beschreibt. In Abhängigkeit der Querbeschleunigungsgröße und der Größe, die das zeitliche Verhalten der Querbeschleunigungsgröße beschreibt, wird eine Eingriffsgröße unter Verwendung von Kennfeldern ermittelt. Zur Beeinflussung des Vortriebes werden Motoreingriffe durchgeführt, wobei die Motoreingriffe in Abhängigkeit der Eingriffsgröße vorgenommen werden.

Bei diesem Konzept werden folglich als Fahrzeugbewegungsgrößen zum einen die Querbeschleunigungsgröße selbst und zum anderen deren zeitliche Ableitung verarbeitet. Genauer gesagt, wird die Eingriffsgröße in Abhängigkeit der Querbeschleunigung und der zeitlichen Änderung der Querbeschleunigung ermittelt. Mit diesem Konzept kann eine ausreichende Seitenstabilität des Fahrzeugs bei eienr Kurvenfahrt sichergestellt werden.

Das erfindungsgemäße Verfahren sieht auch für das zweite Konzept vor, die Eingriffsgröße ggf. in Abhängigkeit von der Pedalgröße zu einem entsprechenden größeren Vortrieb hin zu korrigieren. In diesem Fall entspricht das erfindungsgemäße Verfahren einer Fahrertyperkennung, mit der sportliche Fahrer erkannt werden und mit der bei Erkennen eines sportlichen Fahrers der Vortrieb entsprechend vergrößert wird.

Wie anhand der vorstehenden Ausführungen zu erkennen, ist zunächst eine gewisse "Lernphase" erforderlich, in der anhand der vorstehenden Größen erlernt wird, um welchen Fahrertyp es sich handelt. Sobald feststeht, dass es sich um einen sportlichen Fahrer handelt, wird eine Änderung der Eingriffsgröße zu einem größeren Vortrieb hin zugelassen.

Gemäß einer vorteilhaften Weiterbildung der vorliegenden Erfindung wird vorgeschlagen, dass vor der Korrektur der Eingriffsgröße überprüft wird, ob die Pedalgröße größer als ein vorgebbarer erster Schwellenwert ist, und die Eingriffsgröße nicht korrigiert wird, falls die Pedalgröße kleinergleich dem erste Schwellenwert ist.

Alternativ oder zusätzlich wird gemäß einer anderen vorteilhaften Weiterbildung der vorliegenden Erfindung vorgeschlagen, dass vor der Korrektur der Eingriffsgröße überprüft wird, ob eine Querbeschleunigung des Kraftfahrzeugs kleiner als ein vorgebbarer zweiter Schwellenwert ist, und die Eingriffsgröße nicht korrigiert wird, falls die Querbeschleunigung größergleich dem zweiten Schwellenwert ist. Durch Berücksichtigung der Querbeschleunigung werden solche Fälle ausgeschlossen, bei denen die Erhöhung des Vortriebes zu einer Instabilität des Fahrzeugs in Fahrzeugquerrichtung führen würde. In dem vorstehend beschriebenen Fall des Freischaukelns eines Kraftfahrzeugs, wenn es sich in Tiefschnee festgefahren hat, tritt üblicherweise keine oder nur eine sehr geringe Querbeschleunigung auf, da sich das Fahrzeug nicht seitlich bewegen kann. Ein solcher Fall wird von der Plausibilitätsabfrage erkannt und eine Erhöhung des Vortriebs ermöglicht.

Diese beiden Weiterbildungen umfassen also eine Plausibilitätsprüfung der Pedalgröße und der Querbeschleunigung des Kraftfahrzeugs. Die Eingriffsgröße wird nur dann korrigiert, wenn die Pedalgröße größergleich dem ersten Schwellenwert und/oder die Querbeschleunigung kleinergleich dem zweiten Schwellenwert ist.

Als eine weitere Lösung der Aufgabe der vorliegenden Erfindung wird ausgehend von dem Verfahren der eingangs genannten Art vorgeschlagen, dass
- eine Begrenzungsgröße ermittelt wird, die die Anzahl der Begrenzungen von Fahrervorgaben aufgrund der Ermittlung der Eingriffsgröße innerhalb eines vorgebbaren Zeitfensters beschreibt;
- die Eingriffsgröße in Abhängigkeit der Begrenzungsgröße zu einem entsprechenden größeren Vortrieb hin korrigiert wird, falls die Begrenzungsgröße einen vorgebbaren dritten Schwellenwert überschreitet; und
- der Antriebsmotor mit der korrigierten Eingriffsgröße beaufschlagt wird.

Alternativ zu der Auswertung der Pedalgröße kann auch ausgewertet werden, wie häufig die Fahrervorgaben begrenzt werden. Es wird also ermittelt, wie häufig aufgrund der Ermittlung der Eingriffsgröße in Abhängigkeit der Radgröße oder der Fahrzeugbewegungsgröße ein kleinerer Vortrieb eingestellt wird, als der den der Fahrer tatsächlich erzielen möchte. Diese Betrachtung bezüglich der Häufigkeit der Begrenzung wird innerhalb eines vorgebbaren Zeitfensters durchgeführt. Darüber hinaus bietet es sich vorteilhafterweise an, Änderungen der Raddrehzahlen mit Blick auf das Beschleunigungsverhalten, in diesem Fall werden die nicht angetriebenen Räder betrachtet, oder mit Blick auf das Verzögerungsverhalten, in diesem Fall werden die nicht bremsschlupfgeregelten Räder betrachtet, des Fahrers auszuwerten.

Die Art der das abgegebene Moment beeinflussenden Eingriffsgröße hängt von verschiedenen Faktoren ab. Zum einen können zu unterschiedlichen Antriebsmotoren auch unterschiedliche Eingriffsgrößen eingesetzt werden, durch die das von dem Antriebsmotor abgegebene Moment beeinflusst wird. Bei ein und demselben Antriebsmotor kann es außerdem verschiedene Eingriffsgrößen geben, durch die das von dem Antriebsmotor abgegebene Moment beeinflusst werden kann.

Gemäß einer bevorzugten Ausführungsform der vorliegenden Erfindung wird vorgeschlagen, dass als die das abgegebene Moment beeinflussende Eingriffsgröße bei einem als Brennkraftmaschine ausgebildeten Antriebsmotor eine in ein Saugrohr oder einen Brennraum der Brennkraftmaschine einzuspritzende Kraftstoffmenge herangezogen wird.

Gemäß einer weiteren bevorzugten Ausführungsform der vorliegenden Erfindung wird vorgeschlagen, dass als die das abgegebene Moment beeinflussende Eingriffsgröße bei einem als Brennkraftmaschine ausgebildeten Antriebsmotor ein Zeitpunkt zum Einspritzen von Kraftstoff in ein Saugrohr oder einen Brennraum der Brennkraftmaschine herangezogen wird.

Gemäß noch einer weiteren bevorzugten Ausführungsform der vorliegenden Erfindung wird vorgeschlagen, dass als die das abgegebene Moment beeinflussende Eingriffsgröße bei einem als Brennkraftmaschine ausgebildeten Antriebsmotor ein Zeitpunkt zum Zünden eines in einem Brennraum der Brennkraftmaschine befindlichen Kraftstoff-/Luftgemisches herangezogen wird.

Des Weiteren wird vorgeschlagen, dass als die das abgegebene Moment beeinflussende Eingriffsgröße bei einem als Brennkraftmaschine ausgebildeten Antriebsmotors ein Winkel einer Drosselklappe der Brennkraftmaschine herangezogen wird.

Schließlich wird vorgeschlagen, dass als die das abgegebene Moment beeinflussende Eingriffsgröße bei einem als Elektromotor ausgebildeten Antriebsmotor ein Strom oder eine Spannung herangezogen wird.

Als eine weitere Lösung der Aufgabe der vorliegenden Erfindung wird ausgehend von dem Steuergerät der eingangs genannten Art vorgeschlagen, dass in dem Steuergerät Mittel zur Ausführung des erfindungsgemäßen Verfahrens realisiert sind.

Von besonderer Bedeutung ist die Realisierung des erfindungsgemäßen Verfahrens in der Form eines Speicherelements, das für ein Steuergerät einer Fahrdynamikregelung eines Kraftfahrzeugs vorgesehen ist. Dabei ist auf dem Speicherelement ein Computerprogramm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Speicherelement gespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Die Erfindung betrifft schließlich auch ein Computerprogramm, das zur Ausführung des erfindungsgemäßen Verfahrens geeignet ist, wenn es auf einem Rechengerät, insbesondere auf einem Mikroprozessor, abläuft. Besonders bevorzugt ist dabei, wenn das Computerprogramm auf einem Speicherelement, insbesondere auf einem Flash-Memory, abgespeichert ist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein erstes bevorzugtes Ausführungsbeispiel eines erfindungsgemäßen Verfahrens;
- Figur 2: ein zweites bevorzugtes Ausführungsbeispiel eines erfindungsgemäßen Verfahrens;
- Figur 3: ein zweites bevorzugtes Ausführungsbeispiel eines erfindungsgemäßen Verfahrens; und
- Figur 4: ein Kennfeld zur Ermittlung einer Korrekturgröße zur erfindungsgemäßen Korrektur einer momentenbeeinflussenden Eingriffsgröße.

### Beschreibung der Ausführungsbeispiele

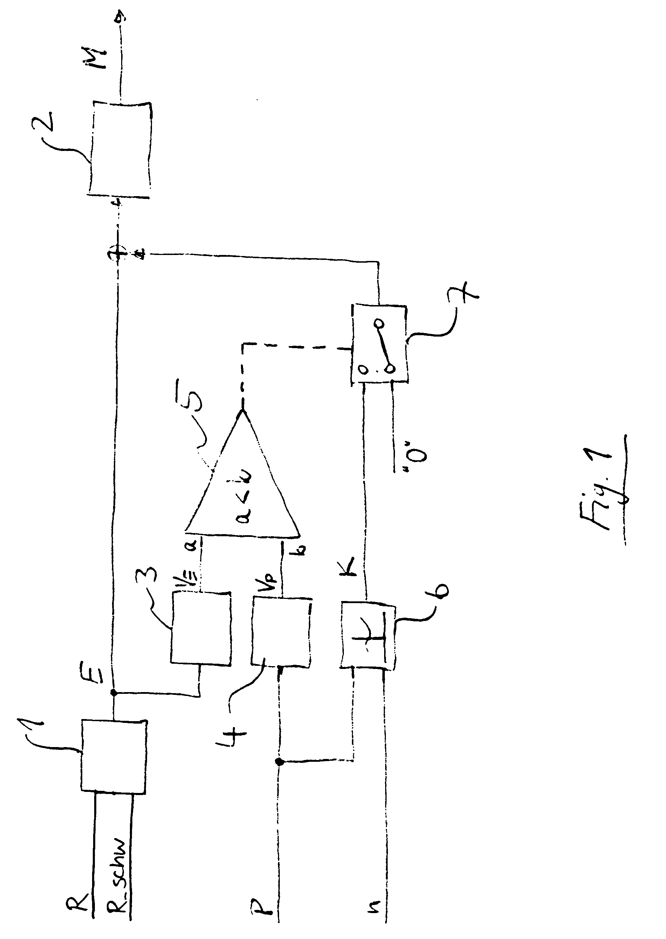

Zur Beschreibung der Fig. 1 wird zunächst wird auf eine Antriebsschlupffregelung eines Kraftfahrzeugs, wie sie in dem SAE-Paper 870337 beschrieben ist, eingegangen. Dabei wird in Abhängigkeit einer Radgröße R eine das Drehmoment M eines Antriebsmotors 2 des Kraftfahrzeugs beeinflussende Eingriffsgröße E ermittelt. Als Radgröße R wird ein Schlupf eines Antriebsrades des Kraftfahrzeugs herangezogen. In Abhängigkeit einer Abweichung zwischen dem ermittelten Radschlupf R und einem zugehörigen Schwellenwert R_schw wird in einer Verarbeitungseinheit 1 die Eingriffsgröße E ermittelt. Die Eingriffsgröße E entspricht dem einzustellenden Vortrieb bzw. beschreibt diesen. Wenn der Antriebsmotor 2 des Kraftfahrzeugs mit der anhand der Antriebsschlupfregelung ermittelten Eingriffsgröße E beaufschlagt wird, kann das Kraftfahrzeug ohne durchdrehende Räder anfahren bzw. beschleunigen.

Bei einem als Dieselmotor ausgebildeten Antriebsmotor 2 handelt es sich bei der Eingriffsgröße E um die einzuspritzende Kraftstoffmenge. Bei Brennkraftmaschinen im allgemeinen kann als Eingriffsgröße E ein Einspritzzeitpunkt, ein Zündzeitpunkt (sog. Zündwinkel) oder ein Drosselklappenwinkel herangezogen werden.

Mit dem in Fig. 1 dargestellten Verfahren kann eine Situation automatisch erkannte werden, in der der Fahrer des Kraftfahrzeugs einen höheren Vortrieb wünscht. Dazu wird eine Pedalgröße P analysiert. Die Pedalgröße P kann der Weg eines Fahrpedals oder der Gradient des Fahrpedalweges sein. Zusätzlich kann auch die Zeitdauer oder die Intensität der Fahrpedalbetätigung in die Pedalgröße P mit einfließen. In einer Verarbeitungseinheit 3 wird ein der Eingriffsgröße E entsprechender Vortrieb V_E berechnet. Ebenso wird in einer Verarbeitungseinheit 4 ein der Pedalgröße P entsprechender Vortrieb V_P ermittelt. In einer Vergleichseinheit 5 erfolgt ein Vergleich des eingestellten Vortriebs V_E mit dem gewünschten Vortrieb V_P. Falls der der Pedalgröße P entsprechende Vortrieb V_P größer als der der Eingriffsgröße E entsprechende Vortrieb V_E ist, wird die Eingriffsgröße E in Abhängigkeit von der Pedalgröße P zu einem entsprechenden größeren Vortrieb hin korrigiert.

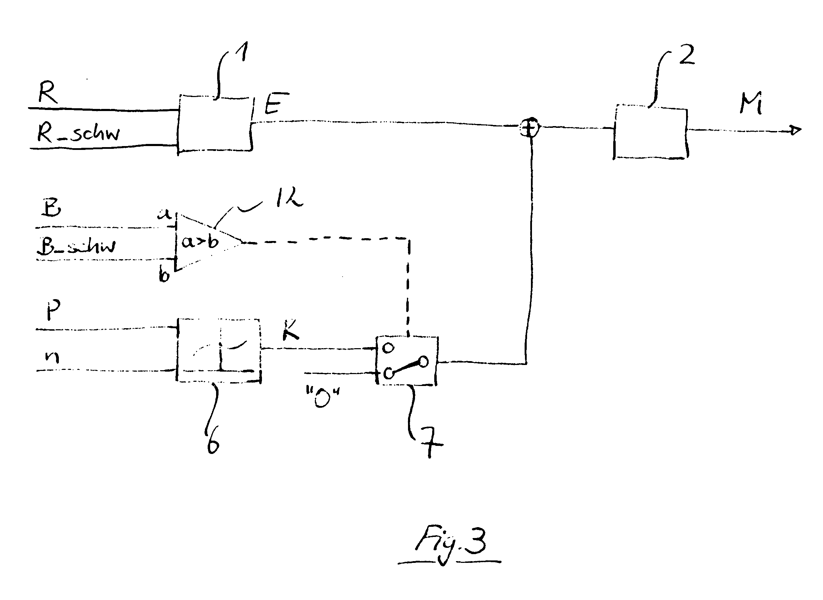

Zur Korrektur der Eingriffsgröße E wird eine Korrekturgröße K ermittelt, die zu der Eingriffsgröße E addiert wird. Die Korrekturgröße K wird anhand eines Kennfelds 6 in Abhängigkeit von der Drehzahl n des Antriebsmotors 2 und der Pedalgröße P ermittelt. Ein entsprechendes Kennfeld 6 ist in Fig. 3 dargestellt. Der Korrekturwert K liegt an einem Eingang einer Schalteinheit 7. An dem anderen Eingang liegt der Wert "0". Die Schalteinheit 7 wird von einem Ausgangssignal der Vergleichseinheit 5 betätigt. Falls der Vortrieb V_E größergleich dem Vortrieb V_P ist, schaltet die Schalteinheit 7 nicht und der Wert "0" wird zu der Eingriffsgröße E addiert. Anderenfalls schaltet die Schalteinheit 7 und die Korrekturgröße K wird zu der Eingriffsgröße E addiert. Der Antriebsmotor 2 wird mit der Summe aus Eingriffsgröße E und Korrekturgröße K beaufschlagt, wodurch ein größerer Vortrieb des Kraftfahrzeugs erzielt wird.

Handelt es sich um eine Schlupfregelung, wie sie in dem ATZ-Artikel, a.a.O. beschrieben wird, wird die Eingriffsgröße E in Abhängigkeit der Abweichung zwischen dem für ein Rad ermittelten Radschlupf R und dem für dieses Rad vorliegenden Radschlupfsollwert ermittelt.

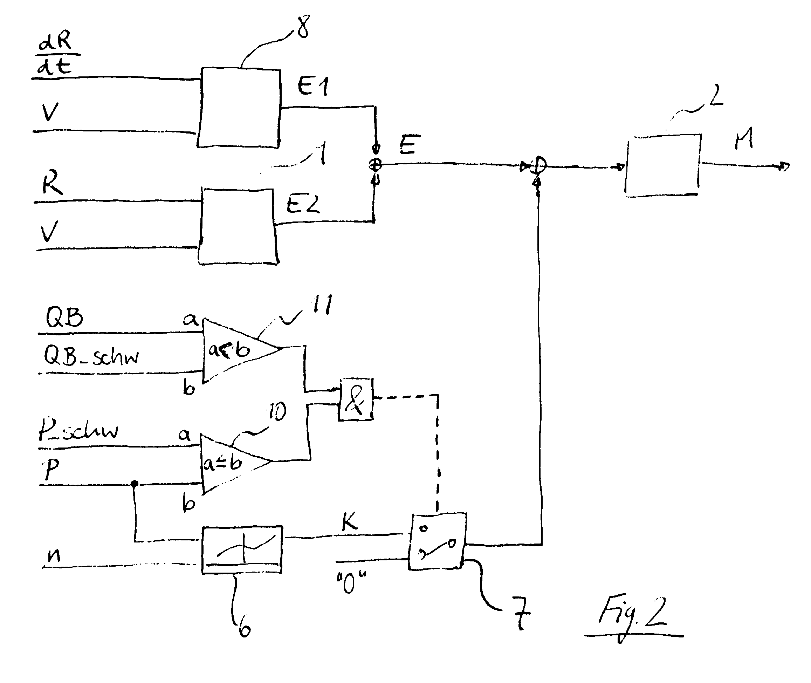

Im folgenden wird ein weiteres Ausführungsbeispiel des erfindungsgemäßen Verfahrens anhand Fig. 2 beschrieben. Handelt es sich um eine Vorrichtung zur Beeinflussung des Vortriebs des Kraftfahrzeugs, wie sie in der DE 199 13 825 beschrieben ist, wird zunächst in Abhängigkeit der zeitlichen Änderung des Radschlupfes R und der Geschwindigkeit V des Fahrzeugs in einer ersten Verarbeitungseinheit 8 ein erster Wert E1 für die Eingriffsgröße E ermittelt. In Abhängigkeit des Radschlupfes R und der Fahrzeuggeschwindigkeit V wird in einer zweiten Verarbeitungseinheit 9 ein zweiter Wert E2 für die Eingriffsgröße E ermittelt. Der erste Wert E1 und der zweite Wert E2 werden zu der Eingriffsgröße E addiert. Wenn die Pedalgröße P größer als ein entsprechender Schwellenwert P_schw ist (Vergleichseinheit 10) und wenn die auf das Fahrzeug wirkende Querbeschleunigung QB kleiner als ein entsprechender Schwellenwert QB_schw ist (Vergleichseinheit 11), wird eine Korrekturgröße K für die Eingriffsgröße E ermittelt. Die Ermittlung der Korrekturgröße K erfolgt, wie bereits erwähnt, mit Hilfe des Kennfeldes 6. Die Korrekturgröße K wird zu der Eingriffgröße E addiert. Durch diese Addition wird eine Traktionsunterstützung realisiert. In Abhängigkeit der so korrigierten Eingriffsgröße E wird der Vortrieb des Fahrzeugs eingestellt. Dieser Vortrieb ist größer als der Vortrieb V_E, der vor der Traktionsunterstüzung vorgelegen hat.

Handelt es sich um ein Verfahren zur Beeinflussung des Vortriebs eines Fahrzeugs, wie es in der DE 198 44 912 beschrieben aber in den Figuren nicht dargestellt ist, wird die Eingriffsgröße E in Abhängigkeit einer Querbeschleunigungsgröße QB und einer Größe dQB/dt, die das zeitliche Verhalten der Querbeschleunigungsgröße QB beschreibt, ermittelt. Die Ermittlung der Eingriffsgröße E erfolgt anhand zweier Kennfelder, einem ersten Kennfeld für die Querbeschleunigung QB und einem zweiten Kennfeld für die Größe dQB/dt, die das zeitliche Verhalten der Querbeschleunigung QB beschreibt. Zur Beeinflussung des Vortriebes werden in Abhängigkeit der Eingriffsgröße E Eingriffe in den Antriebsmotor 2 des Kraftfahrzeugs vorgenommen.

In Fig. 3 ist ein weiteres bevorzugtes Ausführungsbeispiel der vorliegenden Erfindung dargestellt. Dabei wird eine Situation, in der vom Fahrer des Kraftfahrzeugs ein größerer Vortrieb gewünscht wird, durch Auswerten einer Begrenzungsgröße B ermittelt. Die Begrenzungsgröße B beschreibt die Anzahl der Begrenzungen von Fahrervorgaben aufgrund der Ermittlung der Eingriffsgröße E innerhalb eines vorgebbaren Zeitfensters. Falls die Begrenzungsgröße B einen vorgebbaren Schwellenwert B_schw überschreitet, wird die Eingriffsgröße E zu einem entsprechenden größeren Vortrieb hin korrigiert. Der Vergleich erfolgt in einer Vergleichseinheit 12. Zur Korrektur wird die mittels des Kennfelds 6 ermittelte Korrekturgröße K zu der Eingriffsgröße E addiert. Der Antriebsmotor 2 wird mit der korrigierten Eingriffsgröße, d.h. der Summe der ermittelten Eingriffsgröße E und der Korrekturgröße K, beaufschlagt.

Es ist denkbar, im Anschluss an die Ermittlung der Korrekturgröße K eine Plausibilitätsabfrage auszuführen, die in den Figuren jedoch nicht dargestellt ist. Es kann bspw. überprüft werden, ob die auf das Fahrzeug wirkende Querbeschleunigung QB kleiner als ein entsprechender Schwellenwert QB_schw ist, ob die Pedalgröße P größer als ein entsprechender Schwellenwert P_schw und ob die Drehzahl n des Antriebsmotors 2 kleiner als ein entsprechender Schwellenwert n_schw ist. Nur wenn alle Plausibilitätsabfragen erfüllt sind, wird die Korrekturgröße K zu der Eingriffsgröße E addiert.

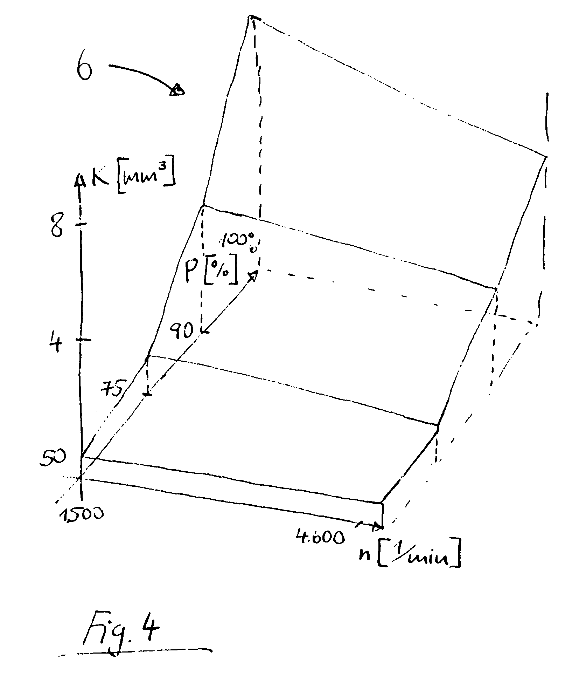

In Fig. 4 ist der Verlauf des Kennfelds 6 zur Ermittlung der Korrekturgröße K aus der Pedalgröße P und der Drehzahl des Antriebsmotor 2 dargestellt. Das Kennfeld 6 ist derart aufgebaut, dass die Korrekturgröße K zum einen mit zunehmender Pedalgröße P und zum anderen mit zunehmender Motordrehzahl n zunimmt. Die Korrekturgröße K nimmt dabei maximale Werte an, wenn die Pedalgröße P groß und die Motordrehzahl n klein ist. Diese Abhängigkeit der Korrekturgröße K von den Eingangsgrößen P, n des Kennfeldes 6 läßt sich folgendermaßen erklären: In Abhängigkeit der Pedalgröße P soll der Vortrieb vergrößert werden, folglich muss mit zunehmender Pedalgröße P die Korrekturgröße größer werden. Die Drehzahl n des Antriebsmotors 2 wird berücksichtigt, da der Motor 2 mit zunehmender Drehzahl n weniger stark korrigiert werden sollte, um die Stabilität des Kraftfahrzeugs nicht zu gefährden.

Im vorliegenden Fall wird ein Dieselmotor betrachtet, dessen Eingriffsgröße E die einzuspritzende Kraftstoffmenge mit der Einheit mm³ ist. Demzufolge hat auch die Korrekturgröße K die Einheit mm³. Die Korrekturgröße K des betrachteten Kennfelds 6 geht von 0 bis 8 mm³. Die Drehzahl n geht von 1.500 U/min bis 4.600 U/min. Die Pedalgröße P geht von 50% bis 100%.

## Patentansprüche

1. Verfahren zur Beeinflussung des Vortriebs eines von einem Antriebsmotor (2) angetriebenen Kraftfahrzeugs, bei dem in Abhängigkeit von mindestens einer Radgröße (R, dR/dt), die das Radverhalten mindestens eines Rades des Kraftfahrzeugs beschreibt, und/oder von mindestens einer Fahrzeugbewegungsgröße (V, QB, dQB/dt), die die Bewegung des Kraftfahrzeugs beschreibt, eine das Drehmoment (M) des Antriebsmotors (2) beeinflussende Eingriffsgröße (E) ermittelt wird, mit der der Antriebsmotor (2) zur beschränkenden Beeinflussung des Vortriebs des Kraftfahrzeugs beaufschlagt wird, **dadurch gekennzeichnet, dass**
- eine Pedalgröße (P) ermittelt wird, die die Betätigung eines Fahrpedals des Kraftfahrzeugs beschreibt;
- ein der Pedalgröße (P) entsprechender Vortrieb mit einem der Eingriffsgröße (E) entsprechenden Vortrieb verglichen wird;
- die Eingriffsgröße (E) in Abhängigkeit von der Pedalgröße (P) zu einem entsprechenden größeren Vortrieb hin korrigiert wird, falls der der Pedalgröße (P) entsprechende Vortrieb (V_P) größer als der der Eingriffsgröße (E) entsprechende Vortrieb (V_E) ist,
- wobei zur Korrektur der Eingriffsgröße (E) in Abhängigkeit der Pedalgröße (P) und der Drehzahl (n) des Antriebsmotors (2) eine Korrekturgröße (K) ermittelt und zu der Eingriffsgröße (E) addiert wird; und
- der Antriebsmotor (2) mit der korrigierten Eingriffsgröße beaufschlagt wird.

2. Verfahren nach Anspruch 1, **dadurch gekennzeichnet, dass** vor der Korrektur der Eingriffsgröße (E) überprüft wird, ob die Pedalgröße (P) größer als ein vorgebbarer erster Schwellenwert (P_schw) ist, und die Eingriffsgröße (E) nicht korrigiert wird, falls die Pedalgröße (P) kleinergleich dem ersten Schwellenwert (P_schw) ist.

3. Verfahren nach Anspruch 1 oder 2, **dadurch gekennzeichnet, dass** vor der Korrektur der Eingriffsgröße (E) überprüft wird, ob eine Querbeschleunigung (QB) des Kraftfahrzeugs kleiner als ein vorgebbarer zweiter Schwellenwert (QB_schw) ist, und die Eingriffsgröße (E) nicht korrigiert wird, falls die Querbeschleunigung (QB) größergleich dem zweiten Schwellenwert (QB_schw) ist.

4. Verfahren nach einem der Ansprüche 1 bis 3, **dadurch gekennzeichnet, dass** die Korrekturgröße (K) anhand eines Kennfelds (6) ermittelt wird.

5. Verfahren zur Beeinflussung des Vortriebs eines von einem Antriebsmotor (2) angetriebenen Kraftfahrzeugs, bei dem in Abhängigkeit von mindestens einer Radgröße (R, dR/dt), die das Radverhalten mindestens eines Rades des Kraftfahrzeugs beschreibt, und/oder mindestens einer Fahrzeugbewegungsgröße (V, QB, dQB/dt), die die Bewegung des Kraftfahrzeugs beschreibt, eine das Drehmoment (M) des Antriebsmotors (2) beeinflussende Eingriffsgröße ermittelt wird, mit der der Antriebsmotor (2) zur beschränkenden Beeinflussung des Vortriebs des Kraftfahrzeugs beaufschlagt wird. **dadurch gekennzeichnet, dass**
- Es ermittelt wird, wie häufig aufgrund der Ermittlung der Eingriffsgröße in Abhängigkeit der Radgröße oder der Fahrzeugbewegungsgröße ein kleinerer Vortrieb eingestellt wird, als der den der Fahrer tatsächlich erzielen möchte.
- eine Begrenzungsgröße (B) ermittelt wird, die die Anzahl der Begrenzungen von Fahrervorgaben aufgrund der Ermittlung der Eingriffsgröße (E) innerhalb eines vorgebbaren Zeitfensters beschreibt;
- die Eingriffsgröße (E) in Abhängigkeit der Begrenzungsgröße (B) zu einem entsprechenden größeren Vortrieb hin korrigiert wird, falls die Begrenzungsgröße (B) einen vorgebbaren dritten Schwellenwert (B_schw) überschreitet; und
- der Antriebsmotor (2) mit der korrigierten Eingriffsgröße beaufschlagt wird.

6. Verfahren nach einem der Ansprüche 1 bis 5, **dadurch gekennzeichnet, dass** als die das abgegebene Drehmoment (M) beeinflussende Eingriffsgröße (E) bei einem als Brennkraftmaschine ausgebildeten Antriebsmotor (2) eine in ein Saugrohr oder einen Brennraum der Brennkraftmaschine einzuspritzende Kraftstoffmenge herangezogen wird.

7. Verfahren nach einem der Ansprüche 1 bis 6, **dadurch gekennzeichnet, dass** als die das abgegebene Drehmoment (M) beeinflussende Eingriffsgröße (E) bei einem als Brennkraftmaschine ausgebildeten Antriebsmotor (2) ein Zeitpunkt zum Einspritzen von Kraftstoff in ein Saugrohr oder einen Brennraum der Brennkraftmaschine herangezogen wird.

8. Verfahren nach einem der Ansprüche 1 bis 7, **dadurch gekennzeichnet, dass** als die das abgegebene Drehmoment (M) beeinflussende Eingriffsgröße (E) bei einem als Brennkraftmaschine ausgebildeten Antriebsmotor (2) ein Zeitpunkt zum Zünden eines in einem Brennraum der Brennkraftmaschine befindlichen Kraftstoff-/ Luftgemisches herangezogen wird.

9. Verfahren nach einem der Ansprüche 1 bis 8, **dadurch gekennzeichnet, dass** als die das abgegebene Moment (M) beeinflussende Eingriffsgröße (E) bei einem als Brennkraftmaschine ausgebildeten Antriebsmotor (2) ein Winkel einer Drosselklappe der Brennkraftmaschine herangezogen wird.

10. Verfahren nach einem der Ansprüche 1 bis 6, **dadurch gekennzeichnet, dass** als die das abgegebene Moment (M) beeinflussende Eingriffsgröße (E) ein Strom oder eine Spannung eines als Elektromotor ausgebildeten Antriebsmotors (2) herangezogen wird.

11. Steuergerät für eine Vorrichtung zur Beeinflussung des Vortriebs eines von einem Antriebsmotor (2) angetriebenen Kraftfahrzeugs, mit
- Mitteln zum Bestimmen mindestens einer Radgröße (R, dR/dt), die das Radverhalten mindestens eines Rades des Kraftfahrzeugs beschreibt, und/oder
- Mitteln zum Bestimmen mindestens einer Fahrzeugbewegungsgröße (V, QB, dQB/dt), die die Bewegung des Kraftfahrzeugs beschreibt; und
- Mitteln zum Bestimmen einer das Drehmoment (M) des Antriebsmotors (2) beeinflussenden Eingriffsgröße (E) in Abhängigkeit von der mindestens einen Radgröße (R, dR/dt) und/oder der mindestens einen Fahrzeugbewegungsgröße (V, QB, dQB/dt), wobei der Antriebsmotor (2) zur beschränkenden Beeinflussung des Vortriebs des Kraftfahrzeugs mit der Eingriffsgröße (E) beaufschlagt wird,
**dadurch gekennzeichnet, dass** in dem Steuergerät Mittel zur Ausführung eines Verfahrens nach einem der Ansprüche 1 bis 10 realisiert sind.

12. Computerprogramm, **dadurch gekennzeichnet, dass** das Computerprogramm zur Ausführung eines Verfahrens nach einem der Ansprüche 1 bis 10 geeignet ist, wenn es auf einem Rechengerät, insbesondere auf einem Mikroprozessor, abläuft.

13. Speicherelement, insbesondere Read-Only-Memory, Random-Access-Memory oder Flash-Memory, für ein Steuergerät einer Vorrichtung zur Beeinflussung des Vortriebs eines Kraftfahrzeugs, auf dem ein Computerprogramm nach Anspruch 12 abgespeichert ist.

## Claims

1. Method for influencing the propulsion of a motor vehicle which is driven by a drive motor (2), in which an intervention variable (E) which influences the torque (M) of the drive motor (2) and which is applied to the drive motor (2) in order to influence the propulsion of the motor vehicle in a restrictive fashion is determined as a function of at least one wheel variable (R, dR/dt) which describes the wheel behaviour of at least one wheel of the motor vehicle, and/or of at least one vehicle movement variable (V, QB, dQB/dt) which describes the movement of the motor vehicle, **characterized in that**
- a pedal variable (P) is determined which describes the activation of an accelerator pedal of the motor vehicle;
- a propulsion value which corresponds to the pedal variable (P) is compared with a propulsion value which corresponds to the intervention variable (E);
- the intervention variable (E) is corrected as a function of the pedal variable (P) to form a corresponding relatively large propulsion value if the propulsion value (V_P) which corresponds to the pedal variable (P) is greater than the propulsion value (V_E) which corresponds to the intervention variable (E),
- wherein, in order to correct the intervention variable (E), a correction variable (K) is determined as a function of the pedal variable (P) and the rotation speed (n) of the drive motor (2) and is added to the intervention variable (E); and
- the corrected intervention variable is applied to the drive motor (2).

2. Method according to Claim 1, **characterized in that** before the correction of the intervention variable (E) it is checked whether the pedal variable (P) is greater than a predefinable first threshold value (P_schw), and the intervention variable (E) is not corrected if the pedal variable (P) is less than or equal to the first threshold value (P_schw).

3. Method according to Claim 1 or 2, **characterized in that** before the correction of the intervention variable (E) it is checked whether a lateral acceleration (QB) of the motor vehicle is smaller than a predefinable second threshold value (QB_schw), and the intervention variable (E) is not corrected if the lateral acceleration (QB) is greater than or equal to the second threshold value (QB_schw).

4. Method according to one of Claims 1 to 3, **characterized in that** the correction variable (K) is determined by means of a characteristic diagram (6).

5. Method for influencing the propulsion of a motor vehicle which is driven by a drive motor (2), in which an intervention variable which influences the torque (M) of the drive motor (2) and which is applied to the drive motor (2) in order to influence the propulsion of the motor vehicle in a restrictive fashion is determined as a function of at least one wheel variable (R, dR/dt) which describes the wheel behaviour of at least one wheel of the motor vehicle, and/or of at least one vehicle movement variable (V, QB, dQB/dt) which describes the movement of the motor vehicle, **characterized in that**
- it is determined how frequently a smaller propulsion value than the driver would actually like to achieve is set on the basis of the determination of the input variable as a function of the wheel variable or the vehicle movement variable,
- a limiting variable (B) is determined which describes the number of limitations of driver predefinitions on the basis of the determination of the input variable (E) within a predefinable time window;
- the input variable (E) is corrected in the direction of a correspondingly larger propulsion value as a function of the limiting variable (B) if the limiting variable (B) exceeds a predefinable third threshold value (B_schw); and
- the corrected intervention variable is applied to the drive motor (2).

6. Method according to one of Claims 1 to 5, **characterized in that**, in a drive motor (2) which is embodied as an internal combustion engine, a fuel quantity which is to be injected into an intake manifold or a combustion chamber of the internal combustion engine is used as the intervention variable (E) which influences the output torque (M).

7. Method according to one of Claims 1 to 6, **characterized in that**, in a drive motor (2) which is embodied as an internal combustion engine, a time for injecting fuel into an intake manifold or a combustion chamber of the internal combustion engine is used as the intervention variable (E) which influences the output torque (M).

8. Method according to one of Claims 1 to 7, **characterized in that**, in a drive motor (2) which is embodied as an internal combustion engine, a time for igniting a fuel/air mixture in a combustion chamber of the internal combustion engine is used as the intervention variable (E) which influences the output torque (M).

9. Method according to one of Claims 1 to 8, **characterized in that**, in a drive motor (2) which is embodied as an internal combustion engine, an angle of a throttle valve of the internal combustion engine is used as the intervention variable (E) which influences the output torque (M).

10. Method according to one of Claims 1 to 6, **characterized in that** a current or a voltage of a drive motor (2) which is embodied as an electric motor is used as the intervention variable (E) which influences the output torque (M).

11. Control unit for a device for influencing the propulsion of a motor vehicle which is driven by a drive motor (2), having
- means for determining at least one wheel variable (R, dR/dt) which describes the wheel behaviour of at least one wheel of the motor vehicle, and/or
- means for determining at least one vehicle movement variable (V, QB, dQB/dt) which describes the movement of the motor vehicle, and
- means for determining an intervention variable (E) which influences the torque (M) of the drive motor (2), as a function of the at least one wheel variable (R, dR/dt) and/or the at least one vehicle movement variable (V, QB, dQB/dt), wherein the intervention variable (E) is applied to the drive motor (2) in order to influence the propulsion of the motor vehicle in a restrictive fashion,
**characterized in that** means for carrying out a method according to one of Claims 1 to 10 are implemented in the control unit.

12. Computer program, **characterized in that** the computer program is suitable for carrying out a method according to one of Claims 1 to 10 if it runs on a computing unit, in particular on a microprocessor.

13. Memory element, in particular read-only memory, random-access memory or flash memory, for a control unit of a device for influencing the propulsion of a motor vehicle in which a computer program according to Claim 12 is stored.

## Revendications

1. Procédé pour influencer la propulsion d'un véhicule automobile entraîné par un moteur (2) selon lequel, en fonction d'au moins une grandeur de roue (R, dR/dt) qui décrit le comportement d'au moins une roue du véhicule automobile et/ou d'au moins une grandeur de déplacement du véhicule (V, QB, dQB/dt) qui décrit le mouvement du véhicule, on détermine le couple (M) de la grandeur d'intervention (E) influençant le moteur d'entraînement (2), grandeur qui est fournie au moteur d'entraînement (2) pour influencer de manière limitée la propulsion du véhicule,
**caractérisé en ce que**
- on détermine une grandeur (P) de la pédale d'accélérateur qui décrit l'actionnement de la pédale d'accélérateur du véhicule ;
- on compare la propulsion correspondant à la grandeur de la pédale (P) et la propulsion correspondant à la grandeur d'intervention (E) ;
- on corrige la grandeur d'intervention (E) en fonction de la grandeur de la pédale (P) pour avoir une propulsion correspondante si la propulsion (V_P) correspondant à la grandeur de la pédale (P) est supérieure à la propulsion (V_E) correspondant à la grandeur d'intervention (E) ;
- pour corriger la grandeur d'intervention (E) en fonction de la grandeur de la pédale (P) et de la vitesse de rotation (n) du moteur d'entraînement (2) on détermine une grandeur de correction (A) et on l'ajoute à la grandeur d'intervention (E) ; et
- on applique la grandeur d'intervention corrigée au moteur d'entraînement (2).

2. Procédé selon la revendication 1,
**caractérisé en ce qu'**
avant la correction de la grandeur d'intervention (E) on vérifie si la grandeur (P) de la pédale est supérieure à une première valeur de seuil prédéfinie (P_schw) et on ne corrige pas la grandeur d'intervention (E) si la grandeur (P) de la pédale est inférieure ou égale à la première valeur de seuil (P_schw) .

3. Procédé selon la revendication 1 ou 2,
**caractérisé en ce qu'**
avant la correction de la grandeur d'intervention (E) on vérifie si l'accélération transversale (QB) du véhicule est inférieure à un second seuil prédéfini (QB_schw) et on ne corrige pas la grandeur d'intervention (E) si l'accélération transversale (QB) est supérieure ou égale à la seconde valeur de seuil (QB_schw).

4. Procédé selon l'une des revendications 1 à 3,
**caractérisé en ce qu'**
on détermine la grandeur de correction (K) à l'aide d'un champ de caractéristiques (6).

5. Procédé pour influencer la propulsion d'un véhicule automobile entraîné par un moteur d'entraînement (2) selon lequel, en fonction d'au moins une grandeur de roue (R, dR/dt) qui décrit le comportement d'au moins une roue du véhicule automobile et/ou d'au moins une grandeur de mouvement du véhicule (V, QB, sQB/dt) décrivant le mouvement du véhicule, on détermine une grandeur d'influence qui influence le couple (M) du moteur d'entraînement (2), et que l'on applique au moteur d'entraînement (2) pour limiter l'influence de la propulsion du véhicule automobile,
**caractérisé en ce qu'**
- on détermine la fréquence à laquelle on a réglé une propulsion plus réduite à cause de la détermination de la grandeur d'influence en fonction de la grandeur de roue ou de la grandeur de mouvement de véhicule, par rapport à ce que le conducteur souhaitait effectivement ;
- on détermine une grandeur limite (B) qui décrit le nombre de limitations de consignes du conducteur par suite de la détermination de la grandeur d'intervention (E) à l'intérieur d'une fenêtre de temps prédéfinie ;
- on corrige la grandeur d'intervention (E) en fonction de la grandeur de référence (B) pour obtenir une propulsion plus importante correspondante si la grandeur limite (B) dépassait une troisième valeur de seuil prédéfinie (B_schw) ; et
- on applique la grandeur d'intervention corrigée au moteur d'entraînement (2).

6. Procédé selon l'une des revendications 1 à 5,
**caractérisé en ce que**
comme grandeur d'intervention (E) qui influence le couple (M) fourni dans le cas d'un moteur d'entraînement (2) réalisé sous la forme d'un moteur à combustion interne, on utilise une quantité de carburant à injecter dans la tubulure d'admission ou dans une chambre de combustion du moteur à combustion interne.

7. Procédé selon l'une des revendications 1 à 6,
**caractérisé en ce que**
comme grandeur d'intervention (E) qui influence le couple fourni (M) dans le cas d'un moteur d'entraînement (2) réalisé comme moteur à combustion interne, on utilise l'instant de l'injection du carburant dans la tubulure d'admission ou dans une chambre de combustion du moteur à combustion interne.

8. Procédé selon l'une des revendications 1 à 7,
**caractérisé en ce que**
comme grandeur d'intervention (E) qui influence le couple (M) fourni, dans le cas d'un moteur d'entraînement (2) constitué par un moteur à combustion interne, on utilise l'instant de l'allumage du mélange carburant/ air dans la chambre de combustion du moteur à combustion interne.

9. Procédé selon l'une des revendications 1 à 8,
**caractérisé en ce que**
comme grandeur d'intervention (E) qui influence le couple fourni (M) dans le cas d'un moteur d'entraînement (2) constitué par un moteur à combustion interne, on utilise l'angle du volet d'étranglement du moteur à combustion interne.

10. Procédé selon l'une des revendications 1 à 6,
**caractérisé en ce que**
la grandeur d'intervention (E) qui influence le couple fourni (M) est une intensité ou une tension d'un moteur d'entraînement (2) réalisé comme moteur électrique.

11. Appareil de commande d'un dispositif pour influencer la propulsion d'un véhicule automobile entraîné par un moteur (2) comprenant :
- des moyens pour déterminer au moins une grandeur de roue (R, R/dt) décrivant le comportement d'au moins une roue du véhicule automobile ; et/ou
- des moyens pour déterminer au moins une grandeur de mouvement du véhicule (V, QB, dQB/dt) décrivant le mouvement du véhicule ; et
- des moyens pour déterminer une grandeur d'intervention (E) qui influence le couple (M) fourni par le moteur d'entraînement (2) en fonction d'au moins une grandeur de roue (R, dR/dt) ; et/ou d'au moins une grandeur de mouvement du véhicule (V, QB, dQB/dt) et le moteur d'entraînement (2) reçoit la grandeur d'intervention (E) pour limiter l'influence de la propulsion du véhicule,
**caractérisé en ce que**
l'appareil de commande comporte des moyens pour mettre en oeuvre un procédé selon l'une des revendications 1 à 10.

12. Programme d'ordinateur,
**caractérisé en ce que**
le programme d'ordinateur est prévu pour exécuter un procédé selon l'une des revendications 1 à 10 lorsque le programme est exécuté sur un appareil de calcul notamment un microprocesseur.

13. Elément de mémoire notamment mémoire morte, mémoire vive ou mémoire Flash, pour un appareil de commande d'un dispositif pour influencer la propulsion d'un véhicule automobile sur lequel est enregistré un programme d'ordinateur selon la revendication 12.
